# EUROPEAN PATENT APPLICATION

(11) **EP 4 550 707 A1**
(43) Date of publication of application: **07.05.2025**
(21) Application number: 22948300.3
(22) Date of filing: 28.06.2022
(51) Int. Cl.: H04L 5/00, H04L 5/18

(54) **INDICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/101992
(87) International publication number: WO 2024/000180

(57) **Abstract**

The present disclosure belongs to the technical field of communications. Provided are an indication method and apparatus, and a device and a storage medium. The method comprises: a transmitting UE receiving at least one SL transmission resource on an unlicensed spectrum, which resource is scheduled by means of a network device and is used for SL transmission; then executing LBT on the SL transmission resource; and transmitting indication information to the network device on the basis of an execution result of the LBT, wherein the indication information is used for indicating whether the transmitting UE has successfully used the SL transmission resource. By means of the method provided in the present disclosure, an SL link communication failure is avoided.

## Description

### TECHNICAL FIELD

The present disclosure relates to the field of communication technologies, and in particular relates to an indication method and apparatus, a device and a storage medium.

### BACKGROUND

In a communication system, a sidelink (SL) is introduced to realize direct communication between user equipment (UE) and UE, in which a resource used in the SL may be scheduled to the UE by a network device, and after a sending UE receives a SL transmission resource scheduled by the network device, the scheduled SL transmission resource may be used to send data to a receiving UE.

In the related art, in order to extend an available frequency, the network device will schedule an unlicensed spectrum resource as the SL transmission resource. In a case where the SL transmission resource scheduled by the network device is the unlicensed spectrum resource, in order to avoid generating the interference while taking into account the fairness between different UEs, the sending UE usually needs to perform listen-before-talk (LBT) on the SL transmission resource on the unlicensed spectrum scheduled by the network device, and only after performing of the LBT is successful, the sending UE may start to use the SL transmission resource in the unlicensed spectrum.

However, in the related art, in a case where the sending UE fails to perform the LBT on the SL transmission resource on the unlicensed spectrum, the sending UE may not use the SL transmission resource, and at this time, the network device also may not know whether the sending UE successfully uses the SL transmission resource, and the network device may not continue to schedule the SL transmission resource for the sending UE, which may result in communication failure.

### SUMMARY

The present disclosure provide an indication method and apparatus, a device and a storage medium, which solves a technical problem that methods in the related art are prone to communication failures.

According to a first aspect of embodiments of the present disclosure, there is provided an indication method, performed by a sending UE, including:
receiving at least one sidelink (SL) transmission resource for SL transmission on an unlicensed spectrum scheduled by a network device;
performing listen-before-talk (LBT) on the SL transmission resource; and
sending indication information to the network device based on a performing result of the LBT, in which the indication information is configured to indicate whether the sending UE successfully uses the SL transmission resource.

In the present disclosure, an indication method is provided, in which the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding communication failure.

Optionally, in an embodiment of the present disclosure, performing the LBT on the SL transmission resource includes:
monitoring a corresponding SL channel based on the SL transmission resource to determine whether the SL channel has channel occupancy time;
determining that performing of the LBT is successful in response to determining that the SL channel has the channel occupancy time; and
determining that the performing of the LBT is failed in response to determining that the SL channel does not have the channel occupancy time.

Optionally, in an embodiment of the present disclosure, sending the indication information to the network device based on the performing result of the LBT includes:
in response to the performing result of the LBT corresponding to an SL transmission resource being: a failure, the sending UE performing any one or more of:
the sending UE ignoring the SL transmission resource; and
sending first indication information corresponding to the SL transmission resource to the network device to indicate that the sending UE does not successfully use the SL transmission resource.

Optionally, in an embodiment of the present disclosure, sending the indication information to the network device based on the performing result of the LBT includes:
in response to the performing result of the LBT corresponding to an SL transmission resource being: a success, the sending UE performing any one or more of:
sending data to a receiving UE using the SL transmission resource; and
sending second indication information corresponding to the SL transmission resource to the network device to indicate that the sending UE successfully uses the SL transmission resource.

Optionally, in an embodiment of the present disclosure, the method further includes:
receiving an automatic repeat request process identifier (HARQ process ID) corresponding to the SL transmission resource and/or a physical uplink control channel (PUCCH) corresponding to the SL transmission resource sent by the network device.

Optionally, in an embodiment of the present disclosure, a method for sending the first indication information corresponding to the SL transmission resource to the network device includes at least one of:
sending the first indication information to the network device through a PUCCH corresponding to the SL transmission resource of which performing of the LBT is failed, in which the first indication information indicates that the performing result of the LBT on the SL transmission resource corresponding to the PUCCH transmitting the first indication information is: a failure;
sending the first indication information to the network device through a specific signaling, in which the first indication information includes an HARQ process ID corresponding to the SL transmission resource of which the performing of the LBT is failed;
sending the first indication information to the network device through a specific signaling, in which the first indication information includes a bitmap, each bit in the bitmap corresponds to an HARQ process ID, and individual bits are made to bear a specific bit value to indicate that the SL transmission resources corresponding to the HARQ process IDs corresponding to the bits are not used successfully; or
sending the first indication information by sending HARQ feedback through the PUCCH corresponding to the SL transmission resource of which the performing of the LBT is failed.

Optionally, in an embodiment of the present disclosure, a method for sending the first indication information by sending the HARQ feedback through the PUCCH corresponding to the SL transmission resource of which the performing of the LBT is failed includes any one of:
sending the first indication information by sending negative acknowledge (NACK) feedback through the PUCCH corresponding to the SL transmission resource of which the performing of the LBT is failed;
sending the first indication information by sending acknowledge (ACK) feedback through the PUCCH corresponding to the SL transmission resource of which the performing of the LBT is failed in a case where the PUCCH is configured for first transmission; or
sending the first indication information by sending NACK feedback through the PUCCH corresponding to the SL transmission resource of which the performing of the LBT is failed in a case where the PUCCH is configured for retransmission.

Optionally, in an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Optionally, in an embodiment of the present disclosure, the method for sending the second indication information corresponding to the SL transmission resource to the network device includes at least one of:
sending the second indication information to the network device through a PUCCH corresponding to the SL transmission resource of which performing of the LBT is successful; or
sending the second indication information to the network device through a specific signaling.

Optionally, in an embodiment of the present disclosure, the specific signaling includes at least one of:
a media access control-control element (MAC CE) signaling;
an uplink control information (UCI) signaling; or
a radio resource control (RRC) signaling.

According to a second aspect of embodiments of the present disclosure, there is provided an indication method, performed by a network device, including:
sending at least one SL transmission resource for an SL on an unlicensed spectrum to a sending UE; and
receiving indication information sent by the sending UE, in which the indication information is configured to indicate whether the sending UE successfully uses the SL transmission resource.

Optionally, in an embodiment of the present disclosure, receiving the indication information sent by the sending UE includes:
receiving first indication information sent by the sending UE, in which the first indication information is configured to indicate that the sending UE does not successfully use the SL transmission resource corresponding to the first indication information.

Optionally, in an embodiment of the present disclosure, receiving the indication information sent by the sending UE includes:
receiving second indication information sent by the sending UE, in which the second indication information is configured to indicate that the sending UE successfully uses the SL transmission resource corresponding to the second indication information.

Optionally, in an embodiment of the present disclosure, the method further includes:
sending an HARQ process ID corresponding to the SL transmission resource and/or a PUCCH corresponding to the SL transmission resource to the sending UE.

Optionally, in an embodiment of the present disclosure, a method for receiving the first indication information sent by the sending UE corresponding to the SL transmission resource includes at least one of:
receiving the first indication information sent by the sending UE through a PUCCH corresponding to an SL transmission resource of which performing of the LBT is failed, in which the first indication information indicates that the performing result of the LBT of the SL transmission resource corresponding to the PUCCH transmitting the first indication information is: a failure;
receiving the first indication information sent by the sending UE through a specific signaling, in which the first indication information includes an HARQ process ID corresponding to the SL transmission resource of which the performing of the LBT is failed;
receiving the first indication information sent by the sending UE through a specific signaling, in which the first indication information includes a bitmap, each bit in the bitmap corresponds to an HARQ process ID, and individual bits are made to bear a specific bit value to indicate that the SL transmission resources corresponding to the HARQ process IDs corresponding to the bits are not used successfully; or
receiving the first indication information by receiving HARQ feedback sent by the sending UE through the PUCCH corresponding to the SL transmission resource of which the performing of the LBT is failed.

Optionally, in an embodiment of the present disclosure, a method for receiving the first indication information by receiving the HARQ feedback sent by the sending UE through the PUCCH corresponding to the SL transmission resource of which the performing of the LBT is failed includes any one of:
determining NACK feedback sent by the sending UE through the PUCCH corresponding to the SL transmission resource of which the performing of the LBT is failed as the first indication information;
determining ACK feedback of first transmission of the sending UE through the PUCCH corresponding to the SL transmission resource of which the performing of the LBT is failed as the first indication information; or
determining NACK feedback of retransmission of the sending UE through the PUCCH corresponding to the SL transmission resource of which the performing of the LBT is failed as the first indication information.

Optionally, in an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Optionally, in an embodiment of the present disclosure, a method for receiving the second indication information sent by the sending UE corresponding to the SL transmission resource includes at least one of:
receiving the second indication information sent by the sending UE through a PUCCH corresponding to the SL transmission resource; or
receiving the second indication information sent by the sending UE through a specific signaling.

Optionally, in an embodiment of the present disclosure, the specific signaling includes at least one of:
a MAC CE signaling;
a UCI signaling; or
an RRC signaling.

According to a third aspect of embodiments of the present disclosure, there is provided an indication apparatus configured in a sending UE, including:
a transceiver module configured to receive at least one SL transmission resource for SL transmission on an unlicensed spectrum scheduled by a network device; and
a processing module configured to perform LBT on the SL transmission resource,
in which the transceiver module is further configured to send indication information to the network device based on a performing result of the LBT, and the indication information is configured to indicate whether the sending UE successfully uses the SL transmission resource.

According to a fourth aspect of embodiments of the present disclosure, there is provided an indication apparatus configured in a network device, including:
a transceiver module configured to send at least one SL transmission resource for an SL on an unlicensed spectrum to a sending UE,
in which the transceiver module is further configured to receive indication information sent by the sending UE based on a performing result of LBT, and the indication information is configured to indicate whether the sending UE successfully uses the SL transmission resource.

According to a fifth aspect of embodiments of the present disclosure, there is provided a communication device including a processor which, when invoking a computer program in a memory, performs the method of the first aspect described above.

According to a sixth aspect of embodiments of the present disclosure, there is provided a communication device including a processor which, when invoking a computer program in a memory, performs the method of the second aspect described above.

According to a seventh aspect of embodiments of the present disclosure, there is provided a communication device, including a processor and a memory, in which a computer program is stored in the memory, and the processor is configured to execute the computer program stored in the memory to cause the device to implement the method of the first aspect described above.

According to an eighth aspect of embodiments of the present disclosure, there is provided a communication device, including a processor and a memory, in which a computer program is stored in the memory, and the processor is configured to execute the computer program stored in the memory to cause the device to implement the method of the second aspect described above.

According to a ninth aspect of embodiments of the present disclosure, there is provided a communication device, including a processor and an interface circuit, in which the interface circuit is configured to receive code instructions and transmit the code instructions to the processor; and the processor is configured to execute the code instructions to cause the method of the first aspect described above to be implemented.

According to a tenth aspect of embodiments of the present disclosure, there is provided a communication device, including a processor and an interface circuit, in which the interface circuit is configured to receive code instructions and transmit the code instructions to the processor; and the processor is configured to execute the code instructions to cause the method of the second aspect described above to be implemented.

According to an eleventh aspect of embodiments of the present disclosure, there is provided a communication system including a communication device of the third aspect to a communication device of the fourth aspect, or a communication device of the fifth aspect to a communication device of the sixth aspect, or a communication device of the seventh aspect to a communication device of the eighth aspect, or a communication device of the ninth aspect to a communication device of the tenth aspect.

According to a twelfth aspect of embodiments of the present disclosure, there is provided a computer-readable storage medium having stored therein instructions for a network device and/or a terminal device as described above that, when executed, cause the terminal device to perform the method of the first aspect described above and/or cause the network device to perform the method of the second aspect described above to be implemented.

According to a thirteenth aspect of embodiments of the present disclosure, there is provided a computer program product including a computer program that, when run on a computer, causes the computer to perform the method of any one of the first to second aspects described above.

According to a fourteenth aspect of embodiments of the present disclosure, there is provided a chip system including at least one processor and an interface for supporting a terminal device to implement functions involved in the method of the first aspect, and/or for supporting a network device to implement functions involved in the method of the second aspect, for example, determining or processing at least one of data and information involved in the above methods. In a possible design, the chip system further includes a memory for storing computer programs and data necessary for a secondary node. The chip system may be consisted of chips, or may include chips and other discrete devices.

According to a fifteenth aspect of embodiments of the present disclosure, there is provided a computer program that, when run on a computer, causes the computer to perform the method of any one of the first to second aspects described above.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1 is a schematic diagram of architecture of a communication system according to an embodiment of the present disclosure.
FIG. 2 is a flow chart of a method for determining information according to an embodiment of the present disclosure.
FIG. 3a is a flow chart of a method for determining information according to another embodiment of the present disclosure.
FIG. 3b is a flow chart of a method for determining information according to yet another embodiment of the present disclosure.
FIG. 4a is a flow chart of a method for determining information according to yet another embodiment of the present disclosure.
FIG. 4b is a flow chart of a method for determining information according to yet another embodiment of the present disclosure.
FIG. 5 is a flow chart of a method for determining information according to yet another embodiment of the present disclosure.
FIG. 6 is a flow chart of a method for determining information according to yet another embodiment of the present disclosure.
FIG. 7 is a flow chart of a method for determining information according to yet another embodiment of the present disclosure.
FIG. 8 is a schematic diagram of a system information configuration apparatus according to an embodiment of the present disclosure.
FIG. 9 is a schematic diagram of a system information configuration apparatus according to another embodiment of the present disclosure.
FIG. 10 is a block diagram of a terminal device according to an embodiment of the present disclosure.
FIG. 11 is a block diagram of a network side device according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with some aspects related to embodiments of the disclosure as recited in the appended claims.

Terms used herein in embodiments of the present disclosure are only for the purpose of describing specific embodiments, but should not be construed to limit the embodiments of the present disclosure. As used in the embodiments of the present disclosure and the appended claims, "a/an", and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

Reference will be made in detail to embodiments of the present disclosure, examples of which are shown in the drawings. The same or similar elements are denoted by the same or similar reference numerals throughout the descriptions. The embodiments described herein with reference to drawings are illustrative, and used to explain the present disclosure. The embodiments shall not be construed to limit the present disclosure.

In order to better understand an indication method disclosed in embodiments of the present disclosure, a communication system to which the embodiments of the present disclosure are applicable will be described below.

For ease of understanding, the terms involved in the present disclosure are first introduced.

### 1. Sidelink (SL)

Sidelink communication is divided into two modes, one called discovery between UEs and the other called communication between UEs. The sidelink uses an uplink resource and an uplink physical channel similar to a cellular network (LTE) for data interactive transmission.

### 2. Listen-Before-Talk (LBT)

The LBT is a widely used technology in radio communication. Before starting transmission, a radio transmitter will first listen to its radio environment, detect whether a channel is idle, and wait until the channel is idle for transmission in a case where the channel is busy, avoiding a channel access conflict, and achieving channel spectrum sharing.

### 3. Hybrid automatic repeat request (HARQ)

The HARQ uses a stop-and-wait protocol to send data. In the stop-and-wait protocol, a sending end stops and waits for an acknowledgement message (ACK/NACK) after sending each transmission block.

### 4. Acknowledge (ACK)/negative acknowledge (NACK)

In a case where a receiver successfully receives data, the receiver replies to a sender with the ACK. Generally, the ACK has its own fixed format and length, and is replies to the sender by the receiver. In a case where the receiver does not receive the data, the receiver replies to the sender with the NACK.

### 5. Physical uplink control channel (PUCCH)

The PUCCH carries different types of uplink control information (UCI) such as HARQ feedback, a scheduling request, channel state information (CSI) feedback (including possible beam related information) and combinations thereof.

### 6. Uplink control information (UCI)

The UCI includes the ACK/NACK for HARQ transmission supporting PDSCH and channel state information for link adaptation/multi-antenna precoding/spatial multiplexing dimensions.

### 7. Radio resource control (RRC) signaling

The RRC signaling may provide a function of parameter configuration for an underlying protocol entity of an access network, and is responsible for functions such as measurement and control related to mobility management of a terminal device.

### 8. Medium access control-control element (MAC CE) signaling

The MAC CE is one way of exchanging control information for the terminal device and a network device, and what is exchanged is control information about an MAC layer.

Reference will be made in detail to embodiments of the present disclosure, examples of which are shown in the drawings. The same or similar elements are denoted by the same or similar reference numerals throughout the descriptions. The embodiments described herein with reference to drawings are illustrative, and used to explain the present disclosure. The embodiments shall not be construed to limit the present disclosure.

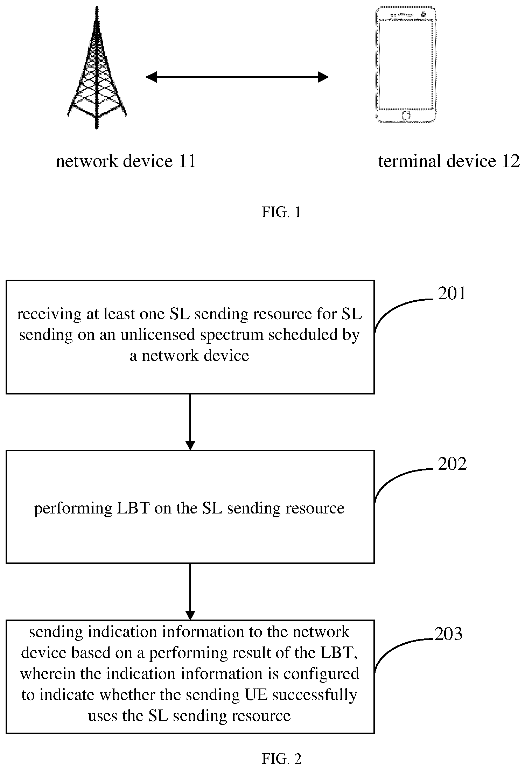

Referring to FIG. 1, FIG. 1 is a schematic diagram of architecture of a communication system according to an embodiment of the present disclosure. The communication system may include, but is not limited to, a network device and a terminal device. The number and form of devices shown in FIG. 1 are merely for example and do not constitute a limitation of the embodiments of the present disclosure. In practical applications, two or more network devices and two or more terminal devices may be included. For example, the communication system shown in FIG. 1 includes a network device 11 and a terminal device 12.

It should be noted that the technical solutions of the embodiments of the present disclosure may be applied to various communication systems. For example: a long term evolution (LTE) system, a 5th generation (5G) mobile communication system, a 5G new radio (NR) system, or other future new mobile communication systems and the like.

The network device 11 in the embodiments of the present disclosure is an entity on a network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system and the like. The specific technology and specific device form adopted by the network device are not limited in the embodiments of the present disclosure. The network device provided in the embodiments of the present disclosure may be composed of a central unit (CU) and a distributed unit (DU), in which the CU may also be referred to as a control unit. A protocol layer of the network device, such as a base station, may be split using a CU-DU structure, with the functions of some protocol layers being placed in the CU for centralized control, and the functions of the remaining part or all of the protocol layers being distributed in the DU, and the DU is controlled centrally by the CU.

The terminal device 12 in the embodiments of the present disclosure is an entity on a user side for receiving or transmitting signals, such as a mobile phone. The terminal device may also be referred to as a terminal, a user equipment (UE), a mobile station (MS), a mobile terminal (MT) and the like. The terminal device may be an automobile with a communication function, a smart automobile, a mobile phone, a wearable device, a Pad, a computer with a wireless transceiving function, a virtual reality (VR) terminal device, an augmented reality (AR) terminal device, a wireless terminal device in industrial control, and a wireless terminal device in self-driving, a wireless terminal device in remote medical surgery, a wireless terminal device in smart grid, a wireless terminal device in transportation safety, a wireless terminal device in smart city, a wireless terminal device in smart home and the like. The specific technology and specific device form adopted by the terminal device are not limited in the embodiments of the present disclosure.

It may be understood that the communication system described in the embodiments of the present disclosure is for a purpose of more clearly illustrating the technical solution of embodiments of the present disclosure, which does not constitute a limitation on the technical solutions provided by the embodiments of the present disclosure. Moreover, it is known by those skilled in the art that the technical solutions provided by the embodiments of the present disclosure are also applicable to similar technical problems with the evolution of the system architecture and the emergence of new business scenarios.

Reference will be made in detail to embodiments of the present disclosure, examples of which are shown in the drawings. The same or similar elements are denoted by the same or similar reference numerals throughout the descriptions. The embodiments described herein with reference to drawings are illustrative, and used to explain the present disclosure. The embodiments shall not be construed to limit the present disclosure.

FIG. 2 is a flow chart of an indication method according to an embodiment of the present disclosure, in which the indication method is applied to a sending UE. As shown in FIG. 2, the indication method may include the following steps.

In step 201, at least one SL transmission resource for SL transmission on an unlicensed spectrum scheduled by a network device is received.

In an embodiment of the present disclosure, the sending UE is specifically a UE in the SL as a sender.

Furthermore, in an embodiment of the present disclosure, the above-mentioned SL transmission resource may be a resource scheduled by the network device for the sending UE to send data through the SL.

Furthermore, in an embodiment of the present disclosure, the at least one SL transmission resource for the SL transmission on the unlicensed spectrum may be dynamically scheduled by the network device according to buffered data reported by the sending UE.

Furthermore, in an embodiment of the present disclosure, the sending UE may receive the at least one SL transmission resource for the SL transmission on the unlicensed spectrum scheduled by the network device through downlink control information (DCI) signaling. Further, in an embodiment of the present disclosure, in a case where the sending UE receives the at least one SL transmission resource for the SL transmission on the unlicensed spectrum scheduled by the network device, the sending UE may also synchronously receive a hybrid automatic repeat request process identifier (HARQ process ID) corresponding to the SL transmission resource and/or the PUCCH corresponding to the SL transmission resource sent by the network device. The HARQ process ID corresponding to the SL transmission resource and the PUCCH corresponding to the SL transmission resource may be included together with the SL transmission resource in the DCI signaling and sent to the sending UE.

The above-mentioned SL transmission resource may be a time-frequency position of the SL transmission resource, and the PUCCH corresponding to the above-mentioned SL transmission resource may be a time-frequency position of the PUCCH corresponding to the SL transmission resource.

It should be noted that after the sending UE receives the HARQ process ID corresponding to the SL transmission resource sent by the network device, the HARQ process ID of the SL may be bound with the HARQ process ID carried in the DCI, i.e. an HARQ process corresponding to the HARQ process ID corresponding to the SL transmission resource carried in the DCI is used for HARQ feedback of the SL.

In step 202, LBT is performed on the SL transmission resource.

In an embodiment of the present disclosure, since the network device schedules the SL transmission resource on the unlicensed spectrum to the terminal device, in order to avoid generating interference while taking into account fairness between different UEs, the sending UE needs to first perform the LBT on the SL transmission resource to determine whether the SL transmission resource may be successfully used by the sending UE.

In an embodiment of the present disclosure, the method for performing the LBT on the SL transmission resource may include:
monitoring a corresponding SL channel based on the SL transmission resource to determine whether the SL channel has channel occupancy time (COT), in which the channel occupancy time may be understood as: a sending time when the UE uses the SL channel to send data; determining that performing of the LBT is successful in response to determining that the SL channel has the channel occupancy time; and determining that the performing of the LBT is failed in response to determining that the SL channel does not have the channel occupancy time. The length of the channel occupancy time may be agreed in advance based on a protocol, or may be configured by the network device, or may be determined autonomously by the sending UE.

In step 203, indication information is sent to the network device based on a performing result of the LBT, in which the indication information is configured to indicate whether the sending UE successfully uses the SL transmission resource.

In an embodiment of the present disclosure, based on different performing results of the LBT, the terminal device may send different indication information to the network device, and the content indicated by the different indication information may also be different. The details of this part will be described in subsequent embodiments.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

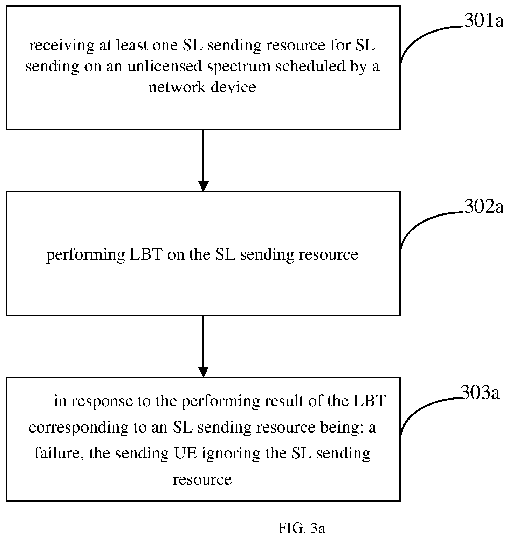

FIG. 3a is a flow chart of an indication method according to an embodiment of the present disclosure, in which the indication method is applied to a sending UE. As shown in FIG. 3a, the indication method may include the following steps.

In step 301a, at least one SL transmission resource for SL transmission on an unlicensed spectrum scheduled by a network device is received.

In step 302a, LBT is performed on the SL transmission resource.

For a related description of the steps 301a-302a reference may be made to the description of the above embodiments.

In step 303a, the sending UE ignores the SL transmission resource in response to a performing result of the LBT corresponding to the SL transmission resource being: a failure.

In an embodiment of the present disclosure, in a case where the performing result of the LBT corresponding to the SL transmission resource is: a failure, it is indicated that a SL channel corresponding to the SL transmission resource does not have channel occupancy time, and it is further indicated that the SL channel does not have a time which may be used for the sending UE to send data, that is, the sending UE may not use the SL transmission resource to send the data to a receiving UE, and the sending UE may ignore the SL transmission resource without performing the SL transmission.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

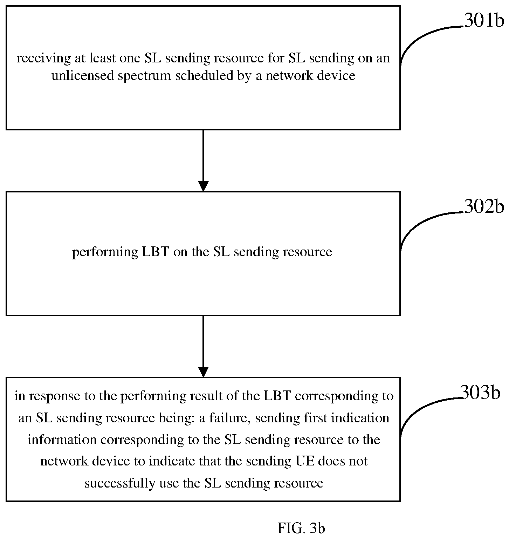

FIG. 3b is a flow chart of an indication method according to an embodiment of the present disclosure, in which the indication method is applied to a sending UE. As shown in FIG. 3b, the indication method may include the following steps.

In step 301b, at least one SL transmission resource for SL transmission on an unlicensed spectrum scheduled by a network device is received.

In step 302b, LBT is performed on the SL transmission resource.

For a related description of the steps 301b-302b reference may be made to the description of the above embodiments.

In step 303b, first indication information corresponding to the SL transmission resource is sent to the network device to indicate that the sending UE does not successfully use the SL transmission resource in response to a performing result of the LBT corresponding to the SL transmission resource being: a failure.

In an embodiment of the present disclosure, in a case where the performing result of the LBT corresponding to the SL transmission resource is: a failure, it is indicated that a SL channel corresponding to the SL transmission resource does not have channel occupancy time, and it is further indicated that the SL channel does not have a time which may be used for the sending UE to send data. That is, the sending UE may not use the SL transmission resource to perform the SL transmission, and the sending UE may send the first indication information to the network device to notify the network device that the sending UE does not successfully use the SL transmission resource, such that the network device may re-schedule other SL transmission resources to the sending UE to ensure that the communication is successful.

In an embodiment of the present disclosure, a method for sending the first indication information corresponding to the SL transmission resource to the network device includes at least one of:

Method 1: the first indication information is sent to the network device through a PUCCH corresponding to the SL transmission resource, in which the first indication information is configured to indicate that the performing result of the LBT on the SL transmission resource corresponding to the PUCCH transmitting the first indication information is: a failure.

Based on this, in an embodiment of the present disclosure, after the network device receives the first indication information, it will first determine the SL transmission resource corresponding to the PUCCH transmitting the first indication information, and then it may determine that the performing of the LBT of the SL transmission resource is failed based on the first indication information, and then it may consider that the SL transmission resource is not successfully used by the sending UE, and then reschedule other SL transmission resources to the sending UE.

Method 2: the first indication information is sent to the network device through a specific signaling, in which the first indication information includes an HARQ process ID corresponding to the SL transmission resource of which the performing of the LBT is failed.

Based on this, in an embodiment of the present disclosure, in a case where the network device receives the first indication information, it may be determined that: in a case where the performing of the LBT of the SL transmission resource corresponding to the HARQ process ID included in the first indication information is failed, and then it is considered that the SL transmission resource is not successfully used by the sending UE, then other SL transmission resources may be rescheduled to the sending UE.

In an embodiment of the present disclosure, the specific signaling may include at least one of:
a MAC CE signaling;
a UCI signaling; or
an RRC signaling.

Method 3: the first indication information is sent to the network device through the specific signaling, in which the first indication information includes a bitmap, each bit in the bitmap corresponds to an HARQ process ID, and individual bits are made to bear a specific bit value to indicate that the SL transmission resources corresponding to the HARQ process IDs corresponding to the bits are not used successfully.

In an embodiment of the present disclosure, the number of bits included in the bitmap may be the same as the total number of SLs of the sending UE, or the number of bits included in the bitmap may be less than the total number of SLs of the sending UE.

Specifically, in an embodiment of the present disclosure, the sending UE may communicate with different receiving UEs through different SLs. Based on this, the first indication information includes the bitmap, and each bit in the bitmap corresponds to an HARQ process ID, in which the HARQ process ID is a HARQ process ID corresponding to the SL of the sending UE, such that a corresponding relationship may be made between each bit in the bitmap and different SLs of the sending UE. On this basis, a specific bit value is determined, and in a case where a certain bit carries the specific bit value, it indicates that the SL transmission resource corresponding to the HARQ process ID corresponding to the bit is not used successfully. Therefore, the sending UE only needs to send the first indication information to the network device once. That is, the sending UE may indicate to the network device whether the SL transmission resources for a plurality of SLs scheduled to the sending UE are used successfully, and does not need to send the first indication information once for each SL transmission resource of which the performing of the LBT is failed, saving the resource.

In an embodiment of the present disclosure, the specific bit value may be agreed upon by a protocol or configured by the network device. The specific bit value may be, for example, 0 or 1.

For example, in an embodiment of the present disclosure, it is assumed that the sending UE includes four SL links, e.g. an SL link-1, an SL link-2, an SL link-3, and an SL link-4, in which the SL link-1 corresponds to an HARQ process ID-1, the SL link-2 corresponds to an HARQ process ID-2, the SL link-3 corresponds to an HARQ process ID-3, and the SL link-4 corresponds to an HARQ process ID-4. The network device schedules an SL transmission resource-1 for the SL link-1, an SL transmission resource-2 for the SL link-2, an SL transmission resource-3 for the SL link-3, and an SL transmission resource-4 for the SL link-4. The number of bits of the bitmap may then be four, and the ordinal number of each bit may correspond to the HARQ process ID. For example, the first bit corresponds to the HARQ process ID-1, the second bit corresponds to the HARQ process ID-2, the third bit corresponds to the HARQ process ID-3, and the fourth bit corresponds to the HARQ process ID-4. Based on this, it is assumed that the specific bit value is set to "0", in a case where the bitmap is "××00", since the values of the third bit and the fourth bit are the specific bit value "0", the bitmap indicates that the SL transmission resource-3 corresponding to the HARQ process ID-3 corresponding to the third bit and the SL transmission resource-4 corresponding to the HARQ process ID-4 corresponding to the fourth bit are not used successfully.

Method 4: the first indication information is sent by sending HARQ feedback through the PUCCH corresponding to the SL transmission resource of which the performing of the LBT is failed.

In an embodiment of the present disclosure, a method for sending the first indication information by sending the HARQ feedback through the PUCCH corresponding to the SL transmission resource of which the performing of the LBT is failed includes any one of the following.

The first indication information is sent by sending NACK feedback through the PUCCH corresponding to the SL transmission resource of which the performing of the LBT is failed. Based on this, in a case where the network device receives the NACK feedback of a certain PUCCH transmission, the network device first determines the SL transmission resource corresponding to the PUCCH that sends the NACK, and further determines that the SL transmission resource is not used successfully, and then reschedules a new SL transmission resource to the sending UE to ensure that the communication is successful.

The first indication information is sent by sending ACK feedback through the PUCCH corresponding to the SL transmission resource of which the performing of the LBT is failed in a case where the PUCCH is configured for first transmission. Based on this, in a case where the network device receives the ACK feedback of first transmission of a certain PUCCH, the network device first determines the SL transmission resource corresponding to the PUCCH that sends the ACK, and further determines that the SL transmission resource is not used successfully, and then reschedules the new SL transmission resource to the sending UE to ensure that the communication is successful.

The first indication information is sent by sending NACK feedback through the PUCCH corresponding to the SL transmission resource of which the performing of the LBT is failed in a case where the PUCCH is configured for retransmission. Based on this, in a case where the network device receives the NACK feedback of retransmission of a certain PUCCH, the network device first determines the SL transmission resource corresponding to the PUCCH that sends the ACK, and further determines that the SL transmission resource is not used successfully, and then reschedules the new SL transmission resource to the sending UE to ensure that the communication is successful.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

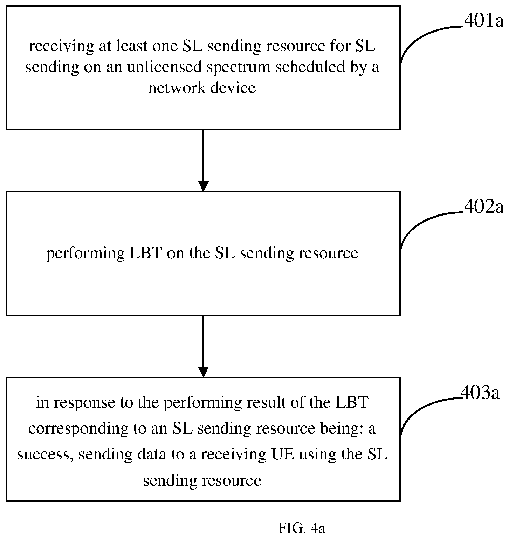

FIG. 4a is a flow chart of an indication method according to an embodiment of the present disclosure, in which the indication method is applied to a sending UE. As shown in FIG. 4a, the indication method may include the following steps.

In step 401a, at least one SL transmission resource for SL transmission on an unlicensed spectrum scheduled by a network device is received.

In step 402a, LBT is performed on the SL transmission resource.

For a related description of the steps 401a-402a reference may be made to the description of the above embodiments.

In step 403a, data is sent to a receiving UE using the SL transmission resource in response to the performing result of the LBT corresponding to an SL transmission resource being: a success.

In an embodiment of the present disclosure, in a case where the performing result of the LBT corresponding to the SL transmission resource is: a success, it is indicated that a SL channel corresponding to the SL transmission resource has channel occupancy time, and it is further indicated that the SL channel has a time which may be used for the sending UE to send data. That is, the sending UE may perform the SL transmission using the SL transmission resource, and the sending UE may send the data to the receiving UE using the SL transmission resource.

Furthermore, in an embodiment of the present disclosure, after the sending UE determines its own channel occupancy time, it may also share the channel occupancy time with other UEs for the SL transmission.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

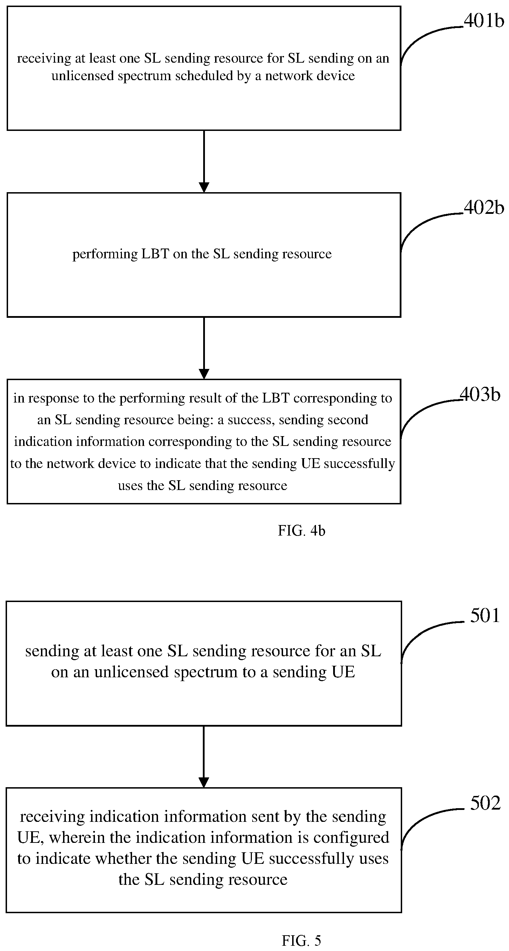

FIG. 4b is a flow chart of an indication method according to an embodiment of the present disclosure, in which the indication method is applied to a sending UE. As shown in FIG. 4b, the indication method may include the following steps.

In step 401b, at least one SL transmission resource for SL transmission on an unlicensed spectrum scheduled by a network device is received.

In step 402b, LBT is performed on the SL transmission resource.

For a related description of the steps 401b-402b reference may be made to the description of the above embodiments.

In step 403b, second indication information corresponding to the SL transmission resource is sent to the network device to indicate that the sending UE successfully uses the SL transmission resource in response to the performing result of the LBT corresponding to an SL transmission resource being: a success.

In an embodiment of the present disclosure, in a case where the performing result of the LBT corresponding to the SL transmission resource is: a success, it is indicated that an SL channel corresponding to the SL transmission resource has channel occupancy time, and it is further indicated that the SL channel has a time which may be used for the sending UE to send data. That is, the sending UE may send the data to the receiving UE using the SL transmission resource. Further, the sending UE may send the second indication information to the network device to indicate that the sending UE successfully uses the SL transmission resource.

Furthermore, in an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Furthermore, in an embodiment of the present disclosure, the method for sending the second indication information corresponding to the SL transmission resource to the network device includes at least one of:
sending the second indication information to the network device through a PUCCH corresponding to the SL transmission resource of which performing of the LBT is successful; or
sending the second indication information to the network device through a specific signaling.

Furthermore, in an embodiment of the present disclosure, the specific signaling includes at least one of:
a MAC CE signaling;
a UCI signaling; or
an RRC signaling.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

FIG. 5 is a flow chart of an indication method according to an embodiment of the present disclosure, in which the indication method is applied to a network device. As shown in FIG. 5, the indication method may include the following steps.

In step 501, at least one SL transmission resource for an SL on an unlicensed spectrum is sent to a sending UE.

In an embodiment of the present disclosure, the above-mentioned SL transmission resource may be a resource scheduled by the network device for the sending UE to send data through the SL.

Furthermore, in an embodiment of the present disclosure, the at least one SL transmission resource for the SL transmission on the unlicensed spectrum may be dynamically scheduled according to buffered data reported by the sending UE.

Furthermore, in an embodiment of the present disclosure, the network device may schedule at least one SL transmission resource for the SL transmission on the unlicensed spectrum to the sending UE through a DCI signaling.

Furthermore, in an embodiment of the present disclosure, in a case of scheduling at least one SL transmission resource for the SL transmission on the unlicensed spectrum to the sending UE, the HARQ process ID corresponding to the SL transmission resource and/or the PUCCH corresponding to the SL transmission resource may also be synchronously sent to the sending UE. The HARQ process ID corresponding to the SL transmission resource and the PUCCH corresponding to the SL transmission resource may be included together with the SL transmission resource in the DCI signaling and sent to the sending UE.

The above-mentioned SL transmission resource may be a time-frequency position of the SL transmission resource, and the PUCCH corresponding to the above-mentioned SL transmission resource may be a time-frequency position of the PUCCH corresponding to the SL transmission resource.

In step 502, indication information sent by the sending UE is received, in which the indication information is configured to indicate whether the sending UE successfully uses the SL transmission resource.

For a related description of the steps 501-502 reference may be made to the description of the above embodiments.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

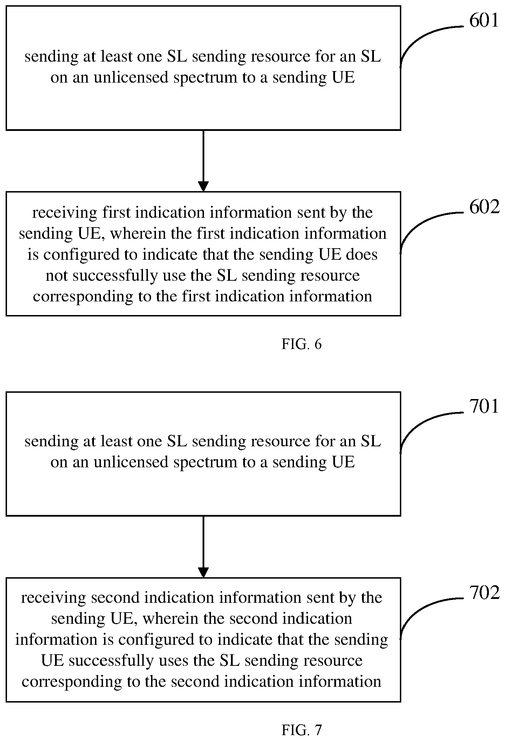

FIG. 6 is a flow chart of an indication method according to an embodiment of the present disclosure, in which the indication method is applied to a network device. As shown in FIG. 6, the indication method may include the following steps.

In step 601, at least one SL transmission resource for an SL on an unlicensed spectrum is sent to a sending UE.

In step 602, first indication information sent by the sending UE is received, in which the first indication information is configured to indicate that the sending UE does not successfully use the SL transmission resource corresponding to the first indication information.

In an embodiment of the present disclosure, a method for receiving the first indication information sent by the sending UE corresponding to the SL transmission resource includes at least one of the following.

Method 1: the first indication information sent by the sending UE through a PUCCH corresponding to an SL transmission resource of which performing of the LBT is failed is received, in which the first indication information indicates that the performing result of the LBT of the SL transmission resource corresponding to the PUCCH transmitting the first indication information is: a failure.

Method 2: the first indication information sent by the sending UE through a specific signaling is received, in which the first indication information includes an HARQ process ID corresponding to the SL transmission resource of which the performing of the LBT is failed.

Method 3: the first indication information sent by the sending UE through a specific signaling is received, in which the first indication information includes a bitmap, each bit in the bitmap corresponds to an HARQ process ID, and a bit in the bitmap bearing a specific bit value is configured to indicate that the SL transmission resource corresponding to the corresponding HARQ process ID is not used successfully.

Method 4: the first indication information is received by receiving HARQ feedback sent by the sending UE through the PUCCH corresponding to the SL transmission resource of which the performing of the LBT is failed.

In an embodiment of the present disclosure, a method for receiving the first indication information by receiving the HARQ feedback sent by the sending UE through the PUCCH corresponding to the SL transmission resource of which the performing of the LBT is failed includes any one of:
determining NACK feedback sent by the sending UE through the PUCCH corresponding to the SL transmission resource of which the performing of the LBT is failed as the first indication information;
determining ACK feedback of first transmission of the sending UE through the PUCCH corresponding to the SL transmission resource of which the performing of the LBT is failed as the first indication information; or
determining NACK feedback of retransmission of the sending UE through the PUCCH corresponding to the SL transmission resource of which the performing of the LBT is failed as the first indication information.

For a related description of the steps 601-602 reference may be made to the description of the above embodiments.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

FIG. 7 is a flow chart of an indication method according to an embodiment of the present disclosure, in which the indication method is applied to a network device. As shown in FIG. 7, the indication method may include the following steps.

In step 701, at least one SL transmission resource for an SL on an unlicensed spectrum is sent to a sending UE.

In step 702, second indication information sent by the sending UE is received, in which the second indication information is configured to indicate that the sending UE successfully uses the SL transmission resource corresponding to the second indication information.

In an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Furthermore, in an embodiment of the present disclosure, a method for receiving the second indication information sent by the sending UE corresponding to the SL transmission resource includes at least one of:
receiving the second indication information sent by the sending UE through a PUCCH corresponding to the SL transmission resource of which performing of the LBT is successful; or
receiving the second indication information sent by the sending UE through a specific signaling.

For a related description of the steps 701-702 reference may be made to the description of the above embodiments.

In summary, in the indication method provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

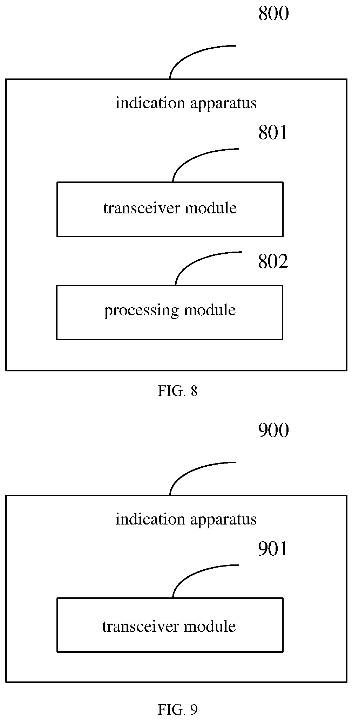

FIG. 8 is a schematic diagram of an indication apparatus according to an embodiment of the present disclosure. As shown in FIG. 8, the apparatus may include:
a transceiver module configured to receive at least one SL transmission resource for SL transmission on an unlicensed spectrum scheduled by a network device; and
a processing module configured to perform LBT on the SL transmission resource,
in which the transceiver module is further configured to send indication information to the network device based on a performing result of the LBT, and the indication information is configured to indicate whether the sending UE successfully uses the SL transmission resource.

In summary, in the indication apparatus provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

Optionally, in an embodiment of the present disclosure, the processing module is further configured to:
monitor a corresponding SL channel based on the SL transmission resource to determine whether the SL channel has channel occupancy time;
determine that performing of the LBT is successful in response to determining that the SL channel has the channel occupancy time; and
determine that the performing of the LBT is failed in response to determining that the SL channel does not have the channel occupancy time.

Optionally, in an embodiment of the present disclosure, the transceiver module is further configured to:
in response to the performing result of the LBT corresponding to an SL transmission resource being: a failure, cause the sending UE to perform any one or more of:
the sending UE ignoring the SL transmission resource; and
sending first indication information corresponding to the SL transmission resource to the network device to indicate that the sending UE does not successfully use the SL transmission resource.

Optionally, in an embodiment of the present disclosure, the transceiver module is further configured to:
in response to the performing result of the LBT corresponding to an SL transmission resource being: a success, cause the sending UE to perform any one or more of:
sending data to a receiving UE using the SL transmission resource; and
sending second indication information corresponding to the SL transmission resource to the network device to indicate that the sending UE successfully uses the SL transmission resource.

Optionally, in an embodiment of the present disclosure, the apparatus is further configured to:
receive an automatic repeat request process identifier (HARQ process ID) corresponding to the SL transmission resource and/or a physical uplink control channel (PUCCH) corresponding to the SL transmission resource sent by the network device.

Optionally, in an embodiment of the present disclosure, the transceiver module is further configured to:
send the first indication information to the network device through a PUCCH corresponding to the SL transmission resource of which performing of the LBT is failed, in which the first indication information indicates that the performing result of the LBT on the SL transmission resource corresponding to the PUCCH transmitting the first indication information is: a failure;
send the first indication information to the network device through a specific signaling, in which the first indication information includes an HARQ process ID corresponding to the SL transmission resource of which the performing of the LBT is failed;
send the first indication information to the network device through a specific signaling, in which the first indication information includes a bitmap, each bit in the bitmap corresponds to an HARQ process ID, and individual bits are made to bear a specific bit value to indicate that the SL transmission resources corresponding to the HARQ process IDs corresponding to the bits are not used successfully; and
send the first indication information by sending HARQ feedback through the PUCCH corresponding to the SL transmission resource of which the performing of the LBT is failed.

Optionally, in an embodiment of the present disclosure, the transceiver module is further configured to:
send the first indication information by sending negative acknowledge (NACK) feedback through the PUCCH corresponding to the SL transmission resource of which the performing of the LBT is failed;
send the first indication information by sending acknowledge (ACK) feedback through the PUCCH corresponding to the SL transmission resource of which the performing of the LBT is failed in a case where the PUCCH is configured for first transmission; and
send the first indication information by sending NACK feedback through the PUCCH corresponding to the SL transmission resource of which the performing of the LBT is failed in a case where the PUCCH is configured for retransmission.

Optionally, in an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Optionally, in an embodiment of the present disclosure, the transceiver module is further configured to:
send the second indication information to the network device through a PUCCH corresponding to the SL transmission resource of which performing of the LBT is successful; and
send the second indication information to the network device through a specific signaling.

Optionally, in an embodiment of the present disclosure, the specific signaling includes at least one of:
a media access control-control element (MAC CE) signaling;
an uplink control information (UCI) signaling; or
a radio resource control (RRC) signaling.

FIG. 9 is a schematic diagram of an indication apparatus according to an embodiment of the present disclosure. As shown in FIG. 9, the apparatus may include:
a transceiver module configured to send at least one SL transmission resource for a sidelink (SL) on an unlicensed spectrum to a sending UE,
in which the transceiver module is further configured to receive indication information sent by the sending UE, and the indication information is configured to indicate whether the sending UE successfully uses the SL transmission resource.

In summary, in the indication apparatus provided by embodiments of the present disclosure, the sending UE may first receive the at least one SL transmission resource for the SL transmission on the unlicensed spectrum scheduled by the network device, then perform the LBT on the SL transmission resource, and send the indication information to the network device based on the performing result of the LBT, the indication information being configured to indicate whether the sending UE successfully uses the SL transmission resource. Consequently, in the present embodiment, the sending UE may send the indication information configured to indicate whether the sending UE successfully uses the SL transmission resource scheduled by the network device to the network device, and thus the network device may know whether the sending UE successfully uses the SL transmission resource based on the indication information, such that a retransmission resource may be scheduled for the sending UE in time in a case where the network device knows that the sending UE does not successfully use the SL transmission resource, thereby avoiding the communication failure.

Optionally, in an embodiment of the present disclosure, the transceiver module is further configured to:
receive first indication information sent by the sending UE, in which the first indication information is configured to indicate that the sending UE does not successfully use the SL transmission resource corresponding to the first indication information.

Optionally, in an embodiment of the present disclosure, the transceiver module is further configured to:
receive second indication information sent by the sending UE, in which the second indication information is configured to indicate that the sending UE successfully uses the SL transmission resource corresponding to the second indication information.

Optionally, in an embodiment of the present disclosure, the apparatus is further configured to:
send an HARQ process ID corresponding to the SL transmission resource and/or a PUCCH corresponding to the SL transmission resource to the sending UE.

Optionally, in an embodiment of the present disclosure, the transceiver module is further configured to:
receive the first indication information sent by the sending UE through a PUCCH corresponding to an SL transmission resource of which performing of the LBT is failed, in which the first indication information indicates that the performing result of the LBT of the SL transmission resource corresponding to the PUCCH transmitting the first indication information is: a failure;
receive the first indication information sent by the sending UE through a specific signaling, in which the first indication information includes an HARQ process ID corresponding to the SL transmission resource of which the performing of the LBT is failed;
receive the first indication information sent by the sending UE through a specific signaling, in which the first indication information includes a bitmap, each bit in the bitmap corresponds to an HARQ process ID, and a bit in the bitmap bearing a specific bit value is configured to indicate that the SL transmission resource corresponding to the corresponding HARQ process ID is not used successfully; and
receive the first indication information by receiving HARQ feedback sent by the sending UE through the PUCCH corresponding to the SL transmission resource of which the performing of the LBT is failed.

Optionally, in an embodiment of the present disclosure, the transceiver module is further configured to:
determine NACK feedback sent by the sending UE through the PUCCH corresponding to the SL transmission resource of which the performing of the LBT is failed as the first indication information;
determine ACK feedback of first transmission of the sending UE through the PUCCH corresponding to the SL transmission resource of which the performing of the LBT is failed as the first indication information; and
determine NACK feedback of retransmission of the sending UE through the PUCCH corresponding to the SL transmission resource of which the performing of the LBT is failed as the first indication information.

Optionally, in an embodiment of the present disclosure, the second indication information includes at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, in which the third indication information indicates that the performing result of the LBT of the SL transmission resource is: a success.

Optionally, in an embodiment of the present disclosure, the transceiver module is further configured to:
receive the second indication information sent by the sending UE through a PUCCH corresponding to the SL transmission resource of which performing of the LBT is successful; and
receive the second indication information sent by the sending UE through a specific signaling.

Optionally, in an embodiment of the present disclosure, the specific signaling includes at least one of:
a MAC CE signaling;
a UCI signaling; or
an RRC signaling.

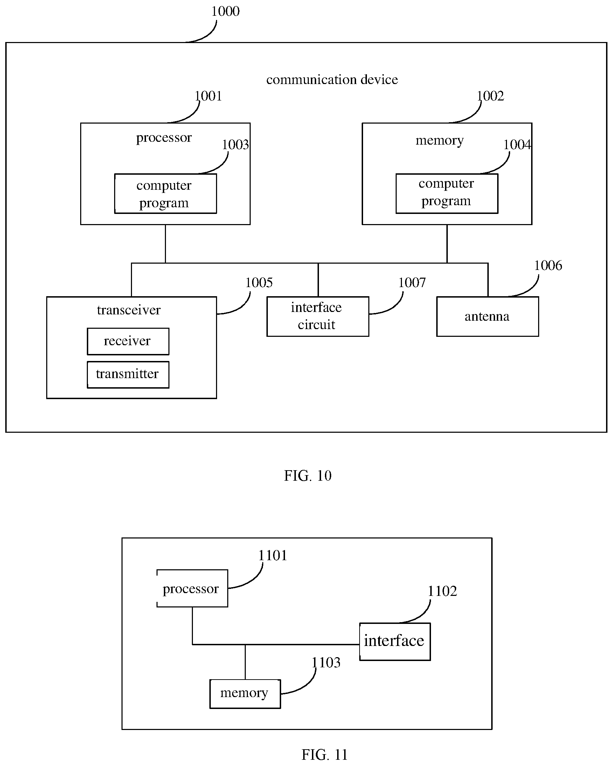

Referring to FIG. 10, FIG. 10 is a schematic diagram of a communication device 1000 according to embodiments of the present disclosure. The communication device 1000 may be a network device; a terminal device; a chip, a chip system or a processor supporting the network device to implement the above-mentioned methods; and a chip, a chip system or a processor supporting the terminal device to implement the above-mentioned methods. The device may be configured to implement the method as described in any of method embodiments described above, with particular reference to the description of method embodiments described above.

The communication device 1000 may include one or more processors 1001. The processor 1001 may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal device, a terminal device chip, a DU or a CU, etc.), execute a computer program and process data of the computer program.

Optionally, the communication device 1000 may further include one or more memories 1002 on which the computer program 1004 may be stored, and the processor 1001 executes the computer program 1004 to cause the communication device 1000 to perform the method as described in the above method embodiments. Optionally, the memory 1002 may also have the data stored therein. The communication device 1000 and the memory 1002 may be provided separately or integrated together.

Optionally, the communication device 1000 may further include a transceiver 1005 and an antenna 1006. The transceiver 1005 may be referred to as a transceiving unit, a transceiving machine, or a transceiving circuit or the like for implementing a transceiving function. The transceiver 1005 may include a receiver and a transmitter, and the receiver may be referred to as a receiving machine or a receiving circuit or the like for implementing a receiving function; the transmitter may be referred to as a transmitting machine or a transmitting circuit or the like for implementing a transmitting function.

Optionally, the communication device 1000 may further include one or more interface circuits 1007. The interface circuit 1007 is configured to receive and transmit the code instructions to the processor 1001. The processor 1001 executes the code instructions to cause the communication device 1000 to perform the method described in any of the above method embodiments.

In one implementation, the processor 1001 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In one implementation, the processor 1001 may store the computer program 1003 that, when run on the processor 1001, causes the communication device 1000 to perform the method described in the above method embodiments. The computer program 1003 may be solidified in the processor 1001, in which case the processor 1001 may be implemented in hardware.

In one implementation, the communication device 1000 may include a circuit that may implement the functions of transmitting or receiving or communication in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in description of the above embodiments may be the network device or the terminal device, but the scope of the communication device described in the present disclosure is not limited thereto. Moreover, the structure of the communication device may not be limited by FIG. 10. The communication device may be a stand-alone device or may be a part of a larger device. For example, the communication device may be:
(1) a stand-alone integrated circuit (IC), or a chip, or a chip system or a subsystem;
(2) a collection of one or more ICs, optionally the IC collection may also include a storage component for storing the data and the computer program;
(3) ASIC such as modem;
(4) a module that may be embedded in other devices;
(5) a receiver, a terminal device, an intelligent terminal device, a cellular phone, a wireless device, a handset, a mobile unit, an on-vehicle device, a network device, a cloud device, an artificial intelligence device, etc.;
(6) others.

In a case where the communication device may be the chip or the chip system, reference is made to the schematic diagram of the chip shown in FIG. 11. The chip shown in FIG. 11 includes a processor 1101 and an interface 1102. There may be one or more processors 1101 and one or more interfaces 1102.

Optionally, the chip further includes the memory 1103, and the memory 1103 is configured to store necessary computer programs and data.

Those skilled in the art may further appreciate that the various illustrative logical blocks and steps described in embodiments of the present disclosure may be implemented in electronic hardware, computer software, or combinations of both. Whether such functionality is implemented by hardware or software depends upon particular application and design requirement of the overall system. Those skilled in the art may implement the described functionality in varying ways for each particular application, but such implementation should not be understood as being beyond the scope of protection of embodiments of the present disclosure.

The present disclosure further provides a computer program medium having instructions stored thereon that, when executed by a computer, causes the function of any of method embodiments described above to be implemented.

The present disclosure also provides a computer program product that, when executed by the computer, causes the function of any of the method embodiments described above to be implemented.

In the above embodiments, the present disclosure may be implemented in whole or in part by hardware, software, firmware or any combination of them. When implemented by software, the present disclosure may be implemented in whole or in part as the computer program product. The computer program product includes one or more computer programs. The computer programs, when loaded and executed on the computer, result in whole or in part in processes or functions according to the embodiments of the present disclosure. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present disclosure are merely for convenience of description and are not intended to limit the scope of the embodiments of the present disclosure, which also represent a sequential order.

Term "at least one" in the present disclosure may also be described as one or more, and "a plurality of" may be two, three, four, or more, and the present disclosure does not limit this. In the embodiments of the present disclosure, regarding one type of technical feature, the technical features in the type of technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present disclosure may be configured or predefined. Values of information in each table are merely examples, and may be configured as other values, which is not limited in the present disclosure. In a case of configuring the correspondence between the information and each parameter, it is not necessarily required that all the correspondences shown in each table must be configured. For example, the correspondence shown in certain rows in the tables in the present disclosure may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a struct, a class, a heap, or a hash table.

"Predefined" in the present disclosure may be understood as defined, predefined, stored, pre-stored, pre-negotiated, pre-configured, cured, or pre-fired.

Those skilled in the art may appreciate that units and algorithm steps of each example described in conjunction with the embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered as being beyond the scope of the present disclosure.

It will be clear to those skilled in the art that, for convenience and brevity of the description, specific working procedures of the above described systems, devices and units may refer to corresponding procedures in the forgoing method embodiments and will not be described in detail here.

The above description is only for specific embodiments of the present disclosure, but the scope of the present disclosure is not limited thereto. Any person skilled in the art may easily think of changes or substitutions within the technical scope of the present disclosure, which shall be covered by the protection scope of the present disclosure. Therefore, the protection scope of the present application shall be in line with that of the attached claims.

## Claims

1. An indication method, performed by a sending user equipment (UE), comprising:
receiving at least one sidelink (SL) transmission resource for SL transmission on an unlicensed spectrum scheduled by a network device;
performing listen-before-talk (LBT) on the SL transmission resource; and
sending indication information to the network device based on a performing result of the LBT, wherein the indication information is configured to indicate whether the sending UE successfully uses the SL transmission resource.

2. The method according to claim 1, wherein performing the LBT on the SL transmission resource comprises:
monitoring a corresponding SL channel based on the SL transmission resource to determine whether the SL channel has channel occupancy time;
determining that performing of the LBT is successful in response to determining that the SL channel has the channel occupancy time; and
determining that the performing of the LBT is failed in response to determining that the SL channel does not have the channel occupancy time.

3. The method according to claim 1, wherein sending the indication information to the network device based on the performing result of the LBT comprises:
in response to the performing result of the LBT corresponding to an SL transmission resource being: a failure, the sending UE performing any one or more of:
the sending UE ignoring the SL transmission resource; and
sending first indication information corresponding to the SL transmission resource to the network device to indicate that the sending UE does not successfully use the SL transmission resource.

4. The method according to claim 1, wherein sending the indication information to the network device based on the performing result of the LBT comprises:
in response to the performing result of the LBT corresponding to an SL transmission resource being: a success, the sending UE performing any one or more of:
sending data to a receiving UE using the SL transmission resource; and
sending second indication information corresponding to the SL transmission resource to the network device to indicate that the sending UE successfully uses the SL transmission resource.

5. The method according to claim 3 or 4, further comprising:
receiving an automatic repeat request process identifier (HARQ process ID) corresponding to the SL transmission resource and/or a physical uplink control channel (PUCCH) corresponding to the SL transmission resource sent by the network device.

6. The method according to claim 3, wherein a method for sending the first indication information corresponding to the SL transmission resource to the network device comprises at least one of:
sending the first indication information to the network device through a PUCCH corresponding to the SL transmission resource of which performing of the LBT is failed, wherein the first indication information indicates that the performing result of the LBT on the SL transmission resource corresponding to the PUCCH transmitting the first indication information is: a failure;
sending the first indication information to the network device through a specific signaling, wherein the first indication information comprises an HARQ process ID corresponding to the SL transmission resource of which the performing of the LBT is failed;
sending the first indication information to the network device through a specific signaling, wherein the first indication information comprises a bitmap, each bit in the bitmap corresponds to an HARQ process ID, and individual bits are made to bear a specific bit value to indicate that the SL transmission resources corresponding to the HARQ process IDs corresponding to the bits are not used successfully; or
sending the first indication information by sending HARQ feedback through the PUCCH corresponding to the SL transmission resource of which the performing of the LBT is failed.

7. The method according to claim 6, wherein a method for sending the first indication information by sending the HARQ feedback through the PUCCH corresponding to the SL transmission resource of which the performing of the LBT is failed comprises any one of:
sending the first indication information by sending negative acknowledge (NACK) feedback through the PUCCH corresponding to the SL transmission resource of which the performing of the LBT is failed;
sending the first indication information by sending acknowledge (ACK) feedback through the PUCCH corresponding to the SL transmission resource of which the performing of the LBT is failed in a case where the PUCCH is configured for first transmission; or
sending the first indication information by sending NACK feedback through the PUCCH corresponding to the SL transmission resource of which the performing of the LBT is failed in a case where the PUCCH is configured for retransmission.

8. The method according to claim 4, wherein the second indication information comprises at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, wherein the third indication information indicates that the performing result of the LBT of the SL transmission resource is: a success.

9. The method according to claim 4, wherein the method for sending the second indication information corresponding to the SL transmission resource to the network device comprises at least one of:
sending the second indication information to the network device through a PUCCH corresponding to the SL transmission resource of which performing of the LBT is successful;
or
sending the second indication information to the network device through a specific signaling.

10. The method according to claim 6 or 9, wherein the specific signaling comprises at least one of:
a media access control-control element (MAC CE) signaling;
an uplink control information (UCI) signaling; or
a radio resource control (RRC) signaling.

11. An indication method, performed by a network device, comprising:
scheduling at least one SL transmission resource for an SL on an unlicensed spectrum to a sending UE; and
receiving indication information sent by the sending UE, wherein the indication information is configured to indicate whether the sending UE successfully uses the SL transmission resource.

12. The method according to claim 11, wherein receiving the indication information sent by the sending UE comprises:
receiving first indication information sent by the sending UE, wherein the first indication information is configured to indicate that the sending UE does not successfully use the SL transmission resource corresponding to the first indication information.

13. The method according to claim 11, wherein receiving the indication information sent by the sending UE comprises:
receiving second indication information sent by the sending UE, wherein the second indication information is configured to indicate that the sending UE successfully uses the SL transmission resource corresponding to the second indication information.

14. The method according to claim 12 or 13, further comprising:
sending an HARQ process ID corresponding to the SL transmission resource and/or a PUCCH corresponding to the SL transmission resource to the sending UE.

15. The method according to claim 12, wherein a method for receiving the first indication information sent by the sending UE comprises at least one of:
receiving the first indication information sent by the sending UE through a PUCCH corresponding to an SL transmission resource of which performing of the LBT is failed, wherein the first indication information indicates that the performing result of the LBT of the SL transmission resource corresponding to the PUCCH transmitting the first indication information is: a failure;
receiving the first indication information sent by the sending UE through a specific signaling, wherein the first indication information comprises an HARQ process ID corresponding to the SL transmission resource of which the performing of the LBT is failed;
receiving the first indication information sent by the sending UE through a specific signaling, wherein the first indication information comprises a bitmap, each bit in the bitmap corresponds to an HARQ process ID, and individual bits are made to bear a specific bit value to indicate that the SL transmission resources corresponding to the HARQ process IDs corresponding to the bits are not used successfully; or
receiving the first indication information by receiving HARQ feedback sent by the sending UE through the PUCCH corresponding to the SL transmission resource of which the performing of the LBT is failed.

16. The method according to claim 15, wherein a method for receiving the first indication information by receiving the HARQ feedback sent by the sending UE through the PUCCH corresponding to the SL transmission resource of which the performing of the LBT is failed comprises any one of:
determining NACK feedback sent by the sending UE through the PUCCH corresponding to the SL transmission resource of which the performing of the LBT is failed as the first indication information;
determining ACK feedback of first transmission of the sending UE through the PUCCH corresponding to the SL transmission resource of which the performing of the LBT is failed as the first indication information; or
determining NACK feedback of retransmission of the sending UE through the PUCCH corresponding to the SL transmission resource of which the performing of the LBT is failed as the first indication information.

17. The method according to claim 13, wherein the second indication information comprises at least one of:
a layer 2 identifier of a receiving UE;
a logical channel from which data sent by the sending UE using the SL transmission resource comes;
whether an SL between the sending UE and the receiving UE activates HARQ retransmission;
an HARQ process ID corresponding to the SL transmission resource; or
third indication information, wherein the third indication information indicates that the performing result of the LBT of the SL transmission resource is: a success.

18. The method according to claim 13, wherein a method for receiving the second indication information sent by the sending UE comprises at least one of:
receiving the second indication information sent by the sending UE through a PUCCH corresponding to the SL transmission resource of which performing of the LBT is successful; or
receiving the second indication information sent by the sending UE through a specific signaling.

19. The method according to claim 15 or 18, wherein the specific signaling comprises at least one of:
a MAC CE signaling;
a UCI signaling; or
an RRC signaling.

20. A communication device, comprising:
a transceiver module configured to receive at least one SL transmission resource for SL transmission on an unlicensed spectrum scheduled by a network device; and
a processing module configured to perform LBT on the SL transmission resource,
wherein the transceiver module is further configured to send indication information to the network device based on a performing result of the LBT, and the indication information is configured to indicate whether the sending UE successfully uses the SL transmission resource.

21. A communication device, comprising:
a transceiver module configured to send at least one SL transmission resource for an SL on an unlicensed spectrum to a sending UE,
wherein the transceiver module is further configured to receive indication information sent by the sending UE, and the indication information is configured to indicate whether the sending UE successfully uses the SL transmission resource.

22. A communication device, comprising
a processor; and
a memory,
wherein a computer program is stored in the memory, and the processor is configured to execute the computer program stored in the memory to cause the device to implement a method according to any one of claims 1 to 10 or 11 to 19.

23. A communication device, comprising
a processor; and
an interface circuit,
wherein the interface circuit is configured to receive code instructions and transmit the code instructions to the processor; and
the processor is configured to execute the code instructions to cause a method according to any one of claims 1 to 10 or 11 to 19 to be implemented.

24. A computer-readable storage medium having stored therein instructions that, when executed, cause the method according to any one of claims 1 to 10 or 11 to 19 to be implemented.
